# EUROPÄISCHE PATENTSCHRIFT

(11) **EP 3 974 055 B1**
(45) Veröffentlichungstag und Bekanntmachung des Hinweises auf die Patenterteilung: **19.04.2023**
(21) Anmeldenummer: 20198807.8
(22) Anmeldetag: 28.09.2020
(51) Int. Cl.: B01J 19/24, B01J 8/06

(54) **VORRICHTUNG ZUR DURCHFÜHRUNG EINER CHEMISCHEN REAKTION IN EINEM PROZESSFLUID IN EINER PRODUKTIONSANLAGE**
DEVICE FOR PERFORMING A CHEMICAL REACTION IN A PROCESS FLUID IN A PRODUCTION PLANT
DISPOSITIF DE RÉALISATION D'UNE RÉACTION CHIMIQUE DANS UN FLUIDE DE PROCESSUS DANS UNE INSTALLATION DE FABRICATION

(43) Veröffentlichungstag der Anmeldung: 30.03.2022
(73) Patentinhaber: Linde GmbH, 82049 Pullach (DE); BASF SE, 67056 Ludwigshafen am Rhein (DE)
(72) Erfinder: Hofstätter, Martin, 81369 München (DE); Delhomme-Neudecker, Dr. Clara, 81825 München (DE); Posselt, Dr. Heinz, 83043 Bad Aibling (DE); Fleischmann, Niklas, 81373 München (DE); Kochendörfer, Kiara Aenne, 68159 Mannheim (DE); Jenne, Eric, 67454 Hassloch (DE); Shustov, Andrey, 67059 Ludwigshafen am Rhein (DE); Still, Werner Josef, 67269 Grünstadt (DE); Stark, Torsten, 68309 Mannheim (DE)
(74) Vertreter: Reuß, Stephanie

(56) Entgegenhaltungen:
- EP-A1- 3 075 704
- WO-A1-2015/197181
- US-A1- 2012 328 269

## Beschreibung

Die Erfindung betrifft eine Vorrichtung zur Durchführung einer chemischen Reaktion in einem Prozessfluid in einer Produktionsanlage, insbesondere betrifft die Erfindung die Erdung der Vorrichtung.

### Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei werden eine oder mehrere Spannungsquellen verwendet, die eine Dreiphasenwechselspannung an drei Außenleitern bereitstellt oder bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Die WO 2015/197181 A1 offenbart ebenfalls einen Reaktor, dessen Reaktionsrohre in Sternpunktschaltung angeordnet sind.

Das Prozessmedium wird über Zuführungsabschnitte und Abführungsabschnitte, die Abschnitte der Reaktionsrohre sind, dem Reaktor zugeführt bzw. aus dem Reaktor herausgeführt. Zuführungsabschnitte und Abführungsabschnitte sind als Abschnitte der Reaktionsrohre mit den Rohrabschnitten (Rohrstrecken), die der Heizung durch elektrischen Strom dienen, verbunden. Da aufgrund der verwendeten Prozessmedien und der hohen Prozesstemperaturen die Verwendung elektrisch isolierender Materialien, etwa Kunststoffe oder Keramiken, für die Zuführungsabschnitte und Abführungsabschnitte nicht oder nur schwer möglich ist, besteht das Problem, dass elektrische Ströme über diese Abschnitte in die Produktionsanlage, in der der Reaktor verwendet wird, außerhalb des Reaktors geleitet werden können und dort zu Schäden an anderen Teilen der Produktionsanlage und Gefahren für Menschen führen können, insbesondere da der vorstehend beschriebene Idealfall eines potentialfreien Sammlers nicht immer erreicht werden kann.

### Offenbarung der Erfindung

Diese Aufgabe wird durch eine Vorrichtung mit den Merkmalen des unabhängigen Anspruchs 1 gelöst, abhängige Ansprüche betreffen bevorzugte Ausführungsformen der Erfindung.

Erfindungsgemäß ist der Sternpunkt der Stromquelle nicht geerdet. Wenn also ein Potentialunterschied zwischen dem Sternpunkt und den Zuführungsabschnitten oder Abführungsabschnitten besteht, kann dies nicht zu einem für die Produktionsanlage gefährlichen (elektrische Sicherheit / Explosionsschutz) bzw. schädigenden (Korrosion / Gerätedefekte) Stromfluss von den Zuführungsabschnitten oder Abführungsabschnitten über die Produktionsanlage in die Erde und von dort zum Sternpunkt führen.

Die Vorrichtung zur Durchführung einer chemischen Reaktion in einem Prozessfluid in einer Produktionsanlage, die wenigstens einen mit der Erde verbundenen Erdungsanschluss zur Erdung von Produktionsanlagen-Bauteilen aufweist, umfasst einen Reaktor und wenigstens eine Stromquelle. Der Reaktor weist ein oder mehrere Reaktionsrohre auf, die über wenigstens einen Zuführungsabschnitt und wenigstens einen Abführungsabschnitt in den Reaktor geführt bzw. aus dem Reaktor herausgeführt sind, und die eine Anzahl elektrisch beheizbarer Rohrstrecken aufweisen, die in einem Stromabgabebereich durch eine elektrisch leitende Sternbrücke miteinander verbunden sind. Insbesondere wird das Prozessfluid über die Zuführungsabschnitte dem Reaktor bzw. den Reaktionsrohren zugeführt und über die Abführungsabschnitte aus dem Reaktor bzw. den Reaktionsrohren abgeführt. Die wenigstens eine Stromquelle, ist dazu eingerichtet, einen mehrphasigen Wechselstrom mit N Phasen an N Phasenleitungen mit einer vorbestimmten Spannung bereitzustellen, wobei N eine ganze Zahl größer gleich 2 ist und wobei für je zwei Phasen gilt, dass eine Phasenverschiebung zwischen den beiden Phasen 2π·k/N beträgt, wobei k jeweils eine ganze Zahl im Bereich von 1 bis N-1 ist. Für jede der wenigstens einen Stromquelle ist eine Anzahl N Stromanschlüsse vorgesehen, die in einem Stromeinspeisebereich jeweils mit mindestens einer der Rohrstrecken verbunden sind, wobei jeder der Stromanschlüsse mit einer der Phasenleitungen der Stromquelle verbunden ist. In der wenigstens einen Stromquelle ist ein Sternpunkt gebildet, an dem die Phasenleitungen der Stromquelle verbunden sind, wobei der Sternpunkt nicht mit einem Erdungsanschluss verbunden ist (d.h. der Sternpunkt ist nicht geerdet).

Bei der chemischen Reaktion kann es sich um eine chemische Reaktion handeln die zumindest teilweise bei einer Temperatur im Bereich von 200 °C bis 1700 °C, insbesondere von 300 °C bis 1400 °C bzw. von 400 °C bis 1100 °C, abläuft. Bevorzugt handelt es sich bei der chemischen Reaktion um eine chemische Reaktion, die zumindest teilweise bei einer Temperatur von mindestens 500 °C, weiter bevorzugt von mindestens 700 °C, abläuft, insbesondere zumindest teilweise in einem Temperaturbereich von 500 °C bzw. 700°C bis 1100 °C. Die bereitgestellten elektrischen Spannungen/Ströme sind entsprechend geeignet entsprechende Heizleistungen zu erbringen. Ebenso sind der Reaktor und die Stromquelle eingerichtet, chemische Reaktionen bei diesen Temperaturen durchzuführen und entsprechende Heizleistungen zu erbringen. Vorzugsweise ist die chemische Reaktion eine der folgenden: Steam-Cracking (Dampfspalten), Steam-Reforming (Dampfreformierung), Dry-Reforming (Trockenreformierung, Kohlendioxidreformierung), Propandehydrierung, allgemein Reaktionen mit Kohlenwasserstoffen, die zumindest teilweise bei mehr als 500°C durchgeführt werden.

Als Produktionsanlage ist hier eine insbesondere industrielle Anlage zu verstehen, in der Prozessmedien bzw. Prozessfluide chemischen Reaktionen unterworfen werden. Diese kann zum Beispiel in einem Produktions-Gebäude angeordnet sein. Die Produktionsanlage schließt neben der erfindungsgemäßen Vorrichtung zum Durchführen einer chemischen Reaktion im Allgemeinen weitere (bzw. andere, d.h. von der Vorrichtung verschiedene) Anlagenteile ein, u.a. sind dies Anlagenteile, in denen das Prozessfluid vorverarbeitet und aus denen das Prozessfluid über die Zuführungsabschnitte dem Reaktor bzw. Reaktionsrohr zugeführt, d.h. in dieses geleitet wird, und Anlagenteile, in denen das Prozessfluid nachverarbeitet und in die das Prozessfluid über die Abführungsabschnitte aus dem Reaktor bzw. Reaktionsrohr abgeführt, d.h. aus denen dieses abgeleitet wird.

Die Produktionsanlage umfasst Erdungsanschlüsse, die dazu dienen Teile der Anlage (d.h. die erfindungsgemäße Vorrichtung und weitere Anlagenteile) zu erden, indem die Teile der Anlage mit einem Erdungsanschluss über eine elektrische Leitung verbunden werden.

Bevorzugt ist N = 3, d.h. es wird dreiphasiger Wechselstrom, sogenannter Drehstrom, verwendet. Aufeinanderfolgende Phasen sind dann jeweils um 2π/3 (entsprechend 120') gegeneinander verschoben. Die Verwendung drei phasigen Wechselstroms ermöglicht insbesondere einen Anschluss an öffentliche Versorgungsnetze.

Bevorzugt ist ein Neutralleiter vorgesehen, der die Sternbrücke mit dem ungeerdeten Sternpunkt der Stromquelle verbindet. Damit kann ein eventueller Potentialunterschied zwischen Sternbrücke und Sternpunkt der Stromquelle, der durch eine unsymmetrische Belastung der Phasen entstehen kann, teilweise (unter Berücksichtigung des Widerstands des Neutralleiters) ausgeglichen werden.

Bevorzugt ist die Sternbrücke nicht mit einem Erdungsanschluss verbunden. Damit können auch keine gefährlichen (elektrische Sicherheit / Explosionsschutz) bzw. schädigenden (Korrosion / Gerätedefekte) elektrischen Ströme durch weitere Anlagenteile von der Stelle der Sternbrücke, an der eine Leitung zu einem Erdungsanschluss angebracht ist, über die Erde, Erdverbindungen der weiteren Anlagenteile, und mit den weitere Anlagenteilen elektrisch leitende verbunden Zuführungs- oder Abführungsabschnitten auftreten.

Weiterhin ist bevorzugt eine Haupterdungsschiene vorgesehen und die Zuführungsabschnitte und die Abführungsabschnitte sind mit dieser Haupterdungsschiene elektrisch leitend verbunden. Dies ist zweckmäßig, da über die Haupterdungsschiene ein Potentialausgleich zwischen Zuführungs- und Abführungsabschnitten erfolgen kann und so mögliche Stromflüsse über weitere Anlagenteile zumindest vermindert werden. Die Haupterdungsschiene, die elektrisch leitend mit der Erde verbunden ist, ist insbesondere in der Produktionsanlage vorgesehen, wobei an der Haupterdungsschiene ein oder mehrere der Erdungsanschlüsse vorgesehen sind (diese Erdungsanschlüsse sind also indirekt über die Haupterdungsschiene mit der Erde verbunden).

Bevorzugt sind die Zuführungsabschnitte und die Abführungsabschnitte räumlich zueinander benachbart angeordnet und durch ein (elektrisch leitendes) Verbindungselement elektrisch leitend miteinander verbunden. Aufgrund der räumlichen Ausdehnung des Reaktors und insbesondere der Sternbrücke (die jeweils mehrere Meter betragen können) kann es zu Potentialunterschieden an verschiedenen Seiten des Reaktors bzw. der Sternbrücke kommen. Indem die Zuführungsabschnitte und die Abführungsabschnitte benachbart angeordnet werden, wird vermieden, dass sich diese Potentialunterschiede als unterschiedliche Potentiale von Zuführungsabschnitten und Abführungsabschnitten manifestieren, was z.B. zu einem unerwünschten Stromfluss von den Zuführungsabschnitten über die Produktionsanlage zu den Abführungsabschnitten führen könnte. Durch die zusätzliche leitende Verbindung über das Verbindungselement wird ein unmittelbarer Potentialausgleich zwischen Zuführungsabschnitten und Abführungsabschnitten ohne mittelbaren Potentialausgleich durch einen Stromfluss über die Produktionsanlage erreicht.

Es sei hier darauf hingewiesen, dass, wenn hier von einem Potentialausgleich gesprochen wird, dieser aufgrund der von Null verschiedenen Widerstände elektrischer Leiter natürlich nicht vollständig sein kein. Schaltungstechnisch bilden die Elemente, über die ein Potentialausgleich erfolgt (z.B. Verbindungselement) Widerstände, ebenso wie auch die weiteren Anlagenteile und die Erde Widerstände bilden. Die Widerstände der Elemente über die ein Potentialausgleich erfolgen kann sind allerdings sehr klein im Gegensatz zu Strompfaden über die weiteren Anlagenteile, so dass über letztere im Wesentlichen kein Stromfluss erfolgt.

Weiter bevorzugt beträgt ein Abstand benachbarter Zuführungsabschnitte und Abführungsabschnitte weniger als ein Zehntel einer Abmessung der Sternbrücke. Mögliche Abmessung sind vorzugsweise wie folgt: ein Abstand benachbarter Zuführungsabschnitte und Abführungsabschnitte beträgt weniger als 10 cm, bevorzugt weniger als 5 cm. Aufgrund dieser geringen Abmessungen kann im Allgemeinen nur ein relativ geringer Potentialunterschied (verglichen mit dem maximalen Potentialunterschied über die gesamte Ausdehnung der Sternbrücke) bestehen. Die Abmessung der Sternbrücke kann z.B. der Durchmesser der kleinsten Kugel (d.h. der Kugel mit geringstem Durchmesser), die die Sternbrücke vollständig einschließt, sein.

Bevorzugt ist das Verbindungselement über eine Erdanschlussleitung mit einem Erdungsanschluss verbunden. Insbesondere, wenn die Sternbrücke nicht geerdet ist, führt die elektrisch leitende Verbindung des Verbindungselements zu einem Erdungsanschluss schaltungstechnisch zu einer "Ein-Punkt"-Erdung der Vorrichtung aus Sicht der weiteren Anlagenteile. Und zwar ist die Vorrichtung genau an der einzigen Stelle geerdet, an der die weiteren Anlagenteile über die Zuführungs- und Abführungsabschnitte elektrisch leitende mit der Vorrichtung verbunden sind. Weder die Stromquelle noch der Verbraucher (Reaktor, Reaktionsrohre) sind (direkt) geerdet. D.h. aus Sicht der weiteren Anlagenteile ist die erfindungsgemäße Vorrichtung schaltungstechnisch (im Sinne einer elektrischen Schaltung) nur an diesem einen Punkt, der geerdet ist, angeschlossen; andere, direkte oder indirekte elektrische Verbindungen bestehen nicht. "Punkt" ist hier klarerweise nicht im Sinne eines nulldimensionalen geometrischen Punktes zu verstehen, sondern im elektrotechnischen Sinne einer elektrischen Verbindungsstelle (möglichst kleiner geometrischer Ausdehnung).

Bevorzugt ist das elektrisch leitende Verbindungselement einstückig, insbesondere als Gussbauteil, gefertigt, wobei weiter bevorzugt das Verbindungselement einstückig mit den Rohreingangsabschnitten und den Rohrausgangsabschnitten gefertigt ist. Vorzugsweise ist dabei, wenn das Verbindungselement als Gussbauteil gefertigt ist, ein Ende der Erdanschlussleitung in das Gussbauteil eingegossen. Diese Maßnahmen führen vorteilhafterweise zu niedrigen Widerständen zwischen den einzelnen Elementen, wobei insbesondere keine Kontaktwiderstände zwischen den Elementen auftreten.

Weitere Vorteile und Ausgestaltungen der Erfindung ergeben sich aus der Beschreibung und der beiliegenden Zeichnung.

Die Erfindung ist anhand von Ausführungsbeispielen in der Zeichnung schematisch dargestellt und wird im Folgenden unter Bezugnahme auf die Zeichnung beschrieben.

### Kurze Beschreibung der Figuren

Figur 1 zeigt eine Vorrichtung gemäß einer bevorzugten Ausführungsform der Erfindung;
Figur 2 zeigt eine Vorrichtung gemäß einer weiteren bevorzugten Ausführungsform der Erfindung;
Figur 3 zeigt eine Querschnittsansicht eines Verbindungselements, das in der Ausführungsform der Figur 2 Verwendung finden kann.

In den Figuren sind einander baulich oder funktionell entsprechende Elemente mit identischen oder ähnlichen Bezugszeichen veranschaulicht und werden der Übersichtlichkeit halber nicht wiederholt erläutert.

### Ausführliche Figurenbeschreibung

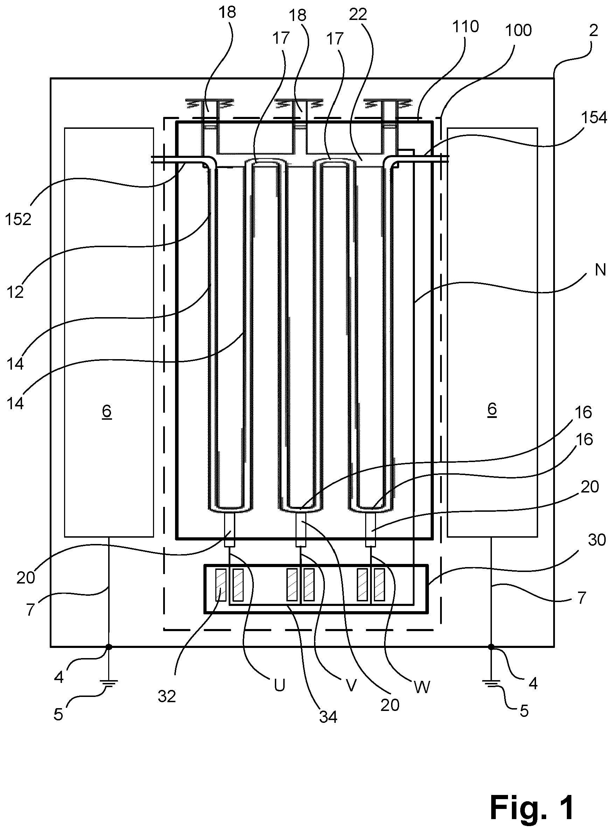

Figur 1 stellt eine Vorrichtung 100 gemäß einer bevorzugten Ausführungsform der Erfindung, die in einer Produktionsanlage 2 installiert ist, dar. Die Vorrichtung 100 umfasst einen Reaktor 110 zum Durchführen einer chemischen Reaktion in einem Reaktionsmedium bzw. Prozessfluid, das durch ein Reaktionsrohr 12 fließt, das elektrisch beheizt wird, und eine Stromquelle 30, die den zur elektrischen Heizung benötigten elektrischen Strom mit einer geeigneten Spannung bereitstellt.

Mehrfach in einer Figur auftretende Elemente sind der Übersichtlichkeit wegen teilweise nur ein- oder zweimal mit einem Bezugszeichen versehen.

In der Produktionsanlage 2 sind ein oder mehrere Erdungspunkte bzw. Erdungsanschlüsse 4 bereitgestellt, die mit der Erde 5 elektrisch leitend verbunden sind. Teile (erfindungsgemäße Vorrichtung, weitere Anlagenteile) der Produktionsanlage werden über diese Erdungsanschlüsse geerdet. Typischerweise weist die Produktionsanlage eine Beton-Bodenplatte auf, auf der die Teile der Anlage installiert sind. Die Erdungsanschlüsse sind dann auf dieser Bodenplatte bereitgestellt, wobei von den Erdungsanschlüssen elektrische Leiter (etwa ein elektrisch leitendes Metallband oder Kabel) durch die Bodenplatte in die Erde oder auch in Wasser (Flusswasser) geführt sind. Einer oder mehrere dieser Erdungsanschlüsse können über eine Erdungsschiene, d.h. eine sogenannte Haupterdungsschiene, (nicht gezeigt) miteinander verbunden sein, die mit der Erde verbunden ist, so dass sozusagen eine indirekte Erdung über die Haupterdungsschiene erfolgt. Weiterhin weist die Produktionsanlage 2 neben dem Reaktor 110 weitere Anlagenteile 6 auf (lediglich symbolisch durch Rechtecke dargestellt), in denen insbesondere eine Vorverarbeitung und eine Nachbearbeitung des Prozessfluids stattfinden. Die weiteren Anlagenteile sind über Erdungsleitungen 7 mit Erdungsanschlüssen verbunden.

Der Reaktor 110 umfasst ein oder mehrere Reaktionsrohre 12 (hier ist nur eines dargestellt), in dem bzw. in denen die chemische Reaktion des Prozessfluids durchgeführt wird, indem es erwärmt wird. Der Rektor 110 weist bevorzugt eine thermische Isolierung, z.B. in Form einer thermisch isolierenden Reaktorwand auf. Das gezeigte Reaktionsrohr 12 hat die Form einer Rohrschlange, die von einem Zuführungsabschnitt 152, durch den das Prozessfluid dem Reaktionsrohr bzw. dem Reaktor zugeführt wird, über Rohrstrecken 14 und Rohrbögen 16, 17, die zusammen die Rohrschlange bilden, zu einem Abführungsabschnitt 154, durch den das Prozessfluid aus dem Reaktionsrohr bzw. Reaktor abgeführt (abgeleitet) wird. Zuführungsabschnitt 152 und Abführungsabschnitt 154 verbinden also den Reaktor 110 elektrisch leitend mit weiteren Anlagenteilen 6, in denen insbesondere das Prozessfluid bereitgestellt und durch das Reaktorrohr gepumpt wird bzw. nach der chemischen Reaktion weiterverarbeitet wird. Wenn eine Reaktorwand vorgesehen ist, verlaufen diese Zuführungsabschnitt 152 und Abführungsabschnitt 154 im Wesentlichen durch diese.

Als Material für das Reaktionsrohr bzw. die Reaktionsrohre wird ein Material mit einer elektrischen Leitfähigkeit verwendet, die für ein elektrisches Heizen des bzw. der Reaktionsrohre geeignet ist, etwa hitzebeständige Stahllegierungen, insbesondere hitzebeständige Chrom-Nickel-Stahllegierungen. Die Zuführungsabschnitte und Abführungsabschnitte sind als Teile des Reaktionsrohrs bzw. der Reaktionsrohre also elektrisch leitend. Solche Stahllegierungen können ebenfalls für die Stromanschlüsse (über die die elektrischen Ströme in den Reaktorbehälter geleitet werden) und für die Verbindungbrücke (die zumindest teilweise im Reaktorbehälter angeordnet ist) verwendet werden. Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden.

Im Falle mehrerer Reaktionsrohre, die z.B. in Gestalt eines Pakets, das mehrere Reaktionsrohre bzw. Rohrschlangen wie in der Figur gezeigt umfasst, die jeweils senkrecht zur Zeichenebene zueinander parallelverschoben sind, kann für jedes Reaktionsrohr ein eigener Zuführungsabschnitt und eine eigener Abführungsabschnitt vorgesehen sein. Bevorzugt ist jedoch, zumindest einige (insbesondere auch alle) der mehreren Reaktionsrohre über einen gemeinsamen Zuführungsabschnitt in den Reaktor zu führen und/oder über einen gemeinsamen Abführungsabschnitt aus dem Reaktor zu führen. Diese einigen (oder alle) Reaktionsrohre sind dann im Reaktor über eine Verteilerrohranordnung mit dem gemeinsamen Zuführungsabschnitt und/oder über eine Verteilerrohranordnung mit dem gemeinsamen Abführungsabschnitt verbunden. Im Falle der obengenannten Anordnung in Gestalt eines Pakets verlaufen entsprechend Rohre der Verteilerrohranordnung senkrecht zur Zeichenebene. Diese Verteilerrohranordnungen werden auch als Header bezeichnet.

Neben Rohrschlangen können die Reaktionsrohre natürlich auch in anderer Form durch den Reaktor geführt sein, z.B. kann jedes Reaktionsrohr im Reaktor eine U-Form aufweisen, oder es können nur geradlinige Reaktionsrohre vorgesehen sein, wobei in diese in jedem Fall über Verteilerrohranordnungen mit einem oder mehreren Zuführungsabschnitten und einem oder mehreren Abführungsabschnitten verbunden sind. Verschiedene Stromanschlüsse (und entsprechend verschiedene Phasenleitungen) sind dann mit verschiedenen Reaktionsrohren verbunden.

Die elektrische Heizung des Reaktionsrohrs 12 erfolgt über die Rohrstrecken 14, durch die ein elektrischer Strom (genauer ein Wechselstrom) fließt, wobei der Strom in einem Stromeinspeisebereich in die Rohrstrecken 14 eingespeist wird und in einem Stromabgabebereich von den Rohrstrecken 14 abgegeben wird. Dazu sind die Rohrstrecken 14 im Stromeinspeisebereich mit Stromanschlüssen 20 elektrisch leitend verbunden und im Stromabgabebereich mit einer (elektrisch leitenden) Sternbrücke 22 elektrisch leitend verbunden. Jeder der Stromanschlüsse 20 ist dabei mit einer oder mehreren der Rohrstrecken verbunden 14 (offensichtlich sollte eine einzelne Rohrstrecke nicht mit mehreren Stromanschlüssen gleichzeitig verbunden sein). Der elektrische Strom wird als Wechselstrom bereitgestellt, wobei verschiedene Stromanschlüsse mit verschiedenen Phasen verbunden sind, vgl. die Beschreibung der Stromquelle 30 weiter unten.

Der Stromeinspeisebereich ist in der Figur durch die unteren Rohrbögen 16 gebildet, die mit entsprechenden Stromanschlüssen 20 (etwa Stromschienen, die in den Reaktor geführt sind) elektrisch leitend verbunden sind, d.h. mit diesen in elektrisch leitendem Kontakt stehen (ausgehend von den Stromanschlüssen erfolgt die Stromeinspeisung in die Rohrstrecken also indirekt über die die unteren Rohrbögen). Der Stromabgabebereich ist in der Figur durch die oberen Rohrbögen 17 gebildet, die mit der Sternbrücke 22 elektrisch leitend verbunden sind (die Stromabgabe erfolgt also indirekt über die oberen Rohrbögen). Unten/oben bezieht sich hier lediglich auf die Anordnung in der Figur, die tatsächliche Anordnung kann unterschiedlich sein. Abweichend davon können die Stromanschlüsse und/oder die Sternbrücke auch direkt mit den Rohrstrecken elektrisch leitend verbunden sein, z.B. über entsprechende Manschetten, die die Rohrstrecken umschließen.

Weiterhin wird der Reaktor 110 bzw. das Reaktionsrohr 12 beispielhaft mittels Aufhängungen 18 von einer nicht weiter dargestellten Stützvorrichtung der Produktionsanlage getragen. Die Aufhängungen 18 sind hier über eine elektrische (und thermische) Isolierung mit der Sternbrücke 22 verbunden, die wiederum mit dem Reaktionsrohr 12 verbunden ist und dieses so trägt. Hier ist auch eine andere Trageanordnung bzw. Stützanordnung denkbar, wobei jeweils auf eine geeignete elektrische und thermische Isolierung zu achten ist.

Die Stromquelle 30 ist als Wechselstromquelle ausgeführt, die mehrphasigen, hier dreiphasigen, Wechselstrom mit einer vorbestimmten Wechselspannung bereitstellt. Allgemeiner ist auch eine andere Anzahl N von Phasen denkbar. Die Phasenverschiebungen zwischen den Phasen sind so gewählt, dass sich die Spannungen bzw. Ströme in einem Sternpunkt aufheben, d.h. die Phasenverschiebung zwischen zwei beliebigen Phasen kann als Bogenmaß ausgedrückt werden als 2π·k/N, bzw. in Grad als 360°·k/N, wobei k eine ganze Zahl im Bereich von 1 bis N-1 ist. Bei drei Phasen also 2π/3 bzw. 4π/3, entsprechend 120°bzw. 240°. Der Phasenunterschied zweier aufeinanderfolgender Phasen wird mit k=1 erhalten, d.h. als 2π/N.

Die Stromquelle 30 ist als Wechselstromtransformator, insbesondere als Hochstromtransformator, ausgeführt. Die Primärseite, d.h. die Wechselstromzufuhr zur Stromquelle 30, z.B. aus einem öffentlichen Versorgungsnetz oder einem Generator ist hier lediglich in Form von schraffierten Kästchen, die primärseitige Transformatorspulen 32 symbolisieren, dargestellt. Primärseitige Stromversorgungsleitungen sind in der Figur nicht dargestellt. Eine primärseitige Wechselspannung kann typischerweise einige hundert bis einige tausend Volt betragen, z.B. 400 V, 690 V oder 1,2 kV. Zwischen der Primärseite der Stromquelle 30 und einem etwaigen öffentlichen Versorgungsnetz oder einem Generator ist möglicherweise wenigstens ein weiterer nicht dargestellter Transformator (evtl. wenigstens ein Regeltransformator) zwischengeschaltet, um eine geeignete Eingangsspannung für den Hochstromtransformator zu erhalten. Statt oder zusätzlich zu diesem zwischengeschalteten wenigstens einem Transformator kann eine Einstellung der Eingangsspannung auch mittels einem oder mehreren Thyristor-Leistungsstellern erfolgen.

Sekundärseitig sind Phasenleitungen U, V, W vorgesehen, an denen die Phasen des Wechselstroms bereitgestellt werden. Die Phasenleitungen U, V, W werden über im einzelnen nicht dargestellte (es ist lediglich eingezeichnet, dass die Phasenleitungen durch die primärseitigen Transformatorspulen 32 verlaufen, um anzudeuten, dass sie elektromagnetisch miteinander in Wechselwirkung stehen) sekundärseitige Transformatorspulen mit elektrischer Energie versorgt. Die sekundärseitige Wechselspannung kann zweckmäßigerweise im Bereich bis 300 V liegen, etwa kleiner 150 V oder kleiner 100 V sein, auch kleiner oder gleich 50 V ist möglich. Die Sekundärseite ist von der Primärseite galvanisch getrennt.

In der Stromquelle 30 sind die Phasenleitungen U, V, W miteinander verbunden, so dass ein Sternpunkt 34 der Stromquelle 30 gebildet wird. Auf eine Erdung dieses Sternpunkts 34 wird verzichtet. D.h. der Sternpunkt 34 der Stromquelle ist von den Erdungsanschlüssen 4 der Produktionsanlage 2 elektrisch isoliert, es besteht also keine Verbindung über einen elektrischen Leiter zu den Erdungsanschlüssen (und es ist auch keine anderweitige Verbindung zur Erde über einen elektrischen Leiter vorgesehen).

Die Phasenleitungen U, V, W sind mit zugehörigen, verschiedenen Stromanschlüssen 20 verbunden. In die mit den Stromanschlüssen verbundenen Rohrstrecken wird also ein mehrphasiger Wechselstrom eingespeist, wobei in Rohrstrecken, die über jeweilige Stromanschlüsse mit verschiedenen Phasenleitungen verbunden sind, verschiedene Phasen des Wechselstroms eingespeist werden. Für diesen mehrphasigen Wechselstrom, der durch die Rohrstrecken 14 fließt, bildet schaltungstechnisch die Sternbrücke 22 einen Sternpunkt (Sternpunkt des Reaktors), so dass sich dort idealerweise, bei symmetrischer Belastung, die Ströme bzw. Spannungen gegenseitig aufheben.

Weiterhin ist ein Neutralleiter N vorgesehen, der die beiden Sternpunkte elektrisch leitend miteinander verbindet, d.h. der einerseits mit dem Sternpunkt 34 der Stromquelle 30 verbunden ist und andererseits mit der Sternbrücke 22 (Sternpunkt des Reaktors) verbunden ist.

Es ist zwar nur eine Stromquelle dargestellt, im Allgemeinen können jedoch auch mehrere Stromquellen vorgesehen sein, insbesondere, wenn mehrere Reaktionsrohre vorgesehen sind. Verschiedene Stromquellen können dann z.B. mit verschiedenen Reaktionsrohren oder mit verschiedenen Teilmengen der Reaktionsrohre verbunden sein.

Da die verschiedenen Phasen der Stromquelle im Allgemeinen unsymmetrisch belastet werden (z.B. können mit verschiedenen Phasenleitungen verbundene Rohrstrecken aufgrund unterschiedlicher Temperaturen unterschiedliche elektrische Widerstände aufweisen), kann zwischen der Sternbrücke 22 und dem Sternpunkt 34 der Stromquelle ein Potentialunterschied entstehen. Dieser Potentialunterschied wird durch den Neutralleiter N zwar teilweise ausgeglichen, da der Neutralleiter jedoch einen endlichen (d.h. von Null verschiedenen) Widerstand aufweist, bleibt im Allgemeinen ein gewisser Potentialunterschied bestehen.

Schaltungstechnisch ist das Reaktionsrohr über die Zuführungsabschnitt 152 und die Abführungsabschnitt 154 elektrisch leitend, mit einem bestimmten Widerstand, mit weiteren bzw. anderen Anlagenteilen 6 der Produktionsanlage 2 verbunden. Die weiteren Anlagenteile 6 sind wiederum über Erdungsleitungen 7 mit Erdungsanschlüssen 4 und damit mit der Erde 5 verbunden. Da der Sternpunkt 34 der Stromquelle nicht geerdet ist (und galvanisch von der Primärseite getrennt ist), kann allerdings kein Stromfluss von der Sternbrücke 22 über die weiteren Anlagenteile 6 zur Erde 5 und von dort zum Sternpunkt 34 der Stromquelle auftreten. Das heißt, ein durch den Potentialunterschied möglicherweise verursachter elektrischer Stromfluss durch die weiteren Anlagenteile 6, der dort zu Schäden oder Gefahren führen kann, wird vermieden bzw. zumindest verringert.

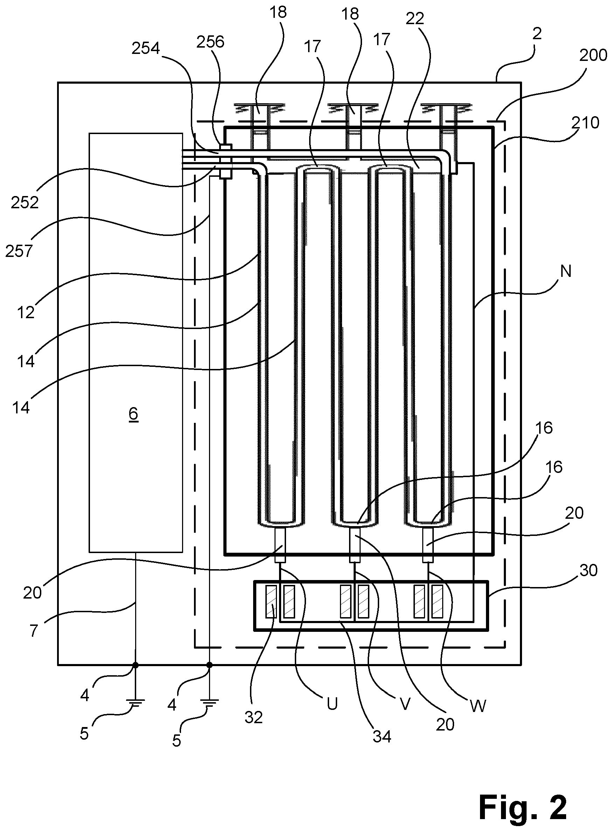

In Figur 2 ist eine Vorrichtung 200 gemäß einer weiteren Ausführungsform der Erfindung dargestellt, diese ist wieder zusammen mit einer Produktionsanlage 2 dargestellt, in der die Vorrichtung installiert ist. Die in Figur 2 gezeigte Vorrichtung 200 gleicht in wesentlichen Teilen der in Figur 1 gezeigten Vorrichtung 100. Eine Beschreibung bereits beschriebener Elemente (insbesondere der Stromquelle und der der elektrischen Heizung der Rohrstrecken) wird der Einfachheit halber nicht wiederholt, sondern es wird hierfür auf Figur 1 verwiesen; auch werden für diese Elemente dieselben Bezugszeichen verwendet wie in Figur 1. Die Vorrichtung 200 umfasst einen Reaktor 210 und eine Stromquelle 30.

Im Reaktor 210 der Vorrichtung 200 sind der Zuführungsabschnitt 252 und der Abführungsabschnitt 254 (im Unterschied zur Vorrichtung 100 der Figur 1) in räumlicher Nähe zueinander angeordnet und miteinander elektrisch leitend verbunden. Dadurch werden Unterschiede zwischen dem elektrischen Potential am Zuführungsabschnitt 252 und dem elektrischen Potential am Abführungsabschnitt 254 verringert, die zu einem elektrischen Strom in den weiteren Anlagenteilen 6 führen könnten, der zwischen Zuführungsabschnitt 252 und Abführungsabschnitt 254 über diese weiteren Anlagenteile fließt. Solche unterschiedlichen Potentiale können zwischen verschiedenen Bereichen der Sternbrücke, deren Material einen nicht verschwindenden elektrischen Widerstand aufweist, aufgrund deren räumlicher Ausdehnung (die z.B. einige Meter betragen kann; in diesem Sinne bildet die Sternbrücke keinen Stern-"Punkt") bestehen und sich auf die Zuführungs- und Abführungsabschnitte übertragen, wenn diese nicht räumlich nahe zueinander angeordnet sind.

Räumlich nahe kann hier im Sinne einer Ausdehnung relativ zur räumlichen Ausdehnung der Sternbrücke (z.B. eine durchschnittliche Abmessung oder eine maximale Abmessung) angegeben werden, z.B. sollte der Abstand von benachbarten Zuführungs- und Abführungsabschnitten zueinander maximal ein Zehntel der räumlichen Ausdehnung der Sternbrücke betragen. Ebenso kann ein absoluter Abstand angegeben werden, z.B. sollte der Abstand benachbarter Zuführungsabschnitte und Abführungsabschnitte weniger als 10 cm, bevorzugt weniger als 5 cm, betragen.

In Figur 2 sind der Zuführungsabschnitt 252 und der Abführungsabschnitt 254 durch ein elektrisch leitendes Verbindungselement 256 miteinander verbunden, so dass etwaige Potentialunterschiede zwischen Zuführungs- und Abführungsabschnitt ausgeglichen werden, die Gefahr, dass ein elektrischer Strom durch die weiteren Anlagenteile 6 fließt also verringert wird. Dieses Verbindungselement 256 ist über eine Erdungsleitung 257 mit einem Erdungsanschluss der Produktionsanlage 2 verbunden. Da keine weitere Erdung des Reaktors vorgesehen ist, insbesondere der Sternpunkt 34 der Stromquelle nicht geerdet ist, stellt diese Erdung über das Verbindungselement 256 die einzige Erdung dar, schaltungstechnisch ist also eine Ein-Punkt-Erdung realisiert.

In Figur 2 befindet sich das Verbindungelement 256 im Wesentlichen an bzw. auf Höhe der Reaktorwand, es ist aber auch möglich, das Verbindungselement außerhalb des Reaktors, z.B. außerhalb einer etwaigen Reaktorwand, oder innerhalb des Reaktors anzuordnen.

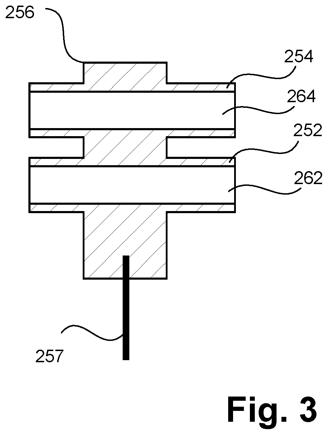

In Figur 3 ist eine bevorzugte Ausführung des Verbindungselements 256 dargestellt. Gemäß dieser Ausführung wird das Verbindungselement 256 einstückig mit dem Zuführungsabschnitt 252 und den Abführungsabschnitt 254 hergestellt, insbesondere gegossen, wobei das Verbindungsstück elektrisch leitend mit einer Erdanschlussleitung 257 verbunden ist. Weiter bevorzugt ist, wie dargestellt, ein Ende der Erdanschlussleitung (z.B. ein elektrisch leitendes Metallband) in das Verbindungselement eingegossen. Alternativ können die Zuführungsabschnitte und Abführungsabschnitte als Rohrabschnitte durch die Öffnungen 262, 264 im Verbindungelement 256 geführt sein, dazu kann z.B. das Verbindungselement zunächst erwärmt werden und (beim nachfolgenden Abkühlen) auf die Zuführungsabschnitte und Abführungsabschnitte geschrumpft werden, um einen guten elektrischen Kontakt zu erreichen. Es wird darauf hingewiesen, dass die geometrische Anordnung der Elemente, wie in Figur 3 gezeichnet, lediglich der Veranschaulichung dient und den Schutzumfang nicht einschränken soll; d.h. in einer tatsächlichen Ausführung kann sich die geometrische Anordnung von der in Figur 3 gezeigten unterscheiden. Ebenso sind die gezeigten relativen Abmessungen der einzelnen Elemente nur beispielhaft und können im Allgemeinen in einer tatsächlichen Ausführung unterschiedlich sein.

## Patentansprüche

1. Vorrichtung (100, 200) zur Durchführung einer chemischen Reaktion in einem Prozessfluid in einer Produktionsanlage (2), die wenigstens einen mit der Erde verbundenen Erdungsanschluss (4) zur Erdung von Produktionsanlagen-Bauteilen aufweist, umfassend
einen Reaktor (110, 210) mit einem oder mehreren Reaktionsrohren (12), die über wenigstens einen Zuführungsabschnitt (152, 252) und wenigstens einen Abführungsabschnitt (154, 254) in den Reaktor geführt bzw. aus dem Reaktor herausgeführt sind, und die eine Anzahl elektrisch beheizbarer Rohrstrecken (14) aufweisen, die in einem Stromabgabebereich durch eine elektrisch leitende Sternbrücke (22) miteinander verbunden sind; und
wenigstens eine Stromquelle (30), die eingerichtet ist, einen mehrphasigen Wechselstrom mit N Phasen an N Phasenleitungen (U, V, W) mit einer vorbestimmten Spannung bereitzustellen, wobei N eine ganze Zahl größer gleich 2 ist und wobei für je zwei Phasen gilt, dass eine Phasenverschiebung zwischen den beiden Phasen 2π·k/N beträgt, wobei k jeweils eine ganze Zahl im Bereich von 1 bis N-1 ist;
wobei für jede der wenigstens einen Stromquelle eine Anzahl N Stromanschlüsse (20) vorgesehen ist, die in einem Stromeinspeisebereich jeweils mit mindestens einer der Rohrstrecken verbunden sind, wobei jeder der Stromanschlüsse mit einer der Phasenleitungen der Stromquelle verbunden ist; und,
wobei in der wenigstens einen Stromquelle ein Sternpunkt (34) gebildet ist, an dem die Phasenleitungen der Stromquelle verbunden sind, **dadurch gekennzeichnet, dass** der Sternpunkt nicht mit einem Erdungsanschluss verbunden ist.

2. Vorrichtung nach Anspruch 1, wobei es sich bei der chemischen Reaktion um eine chemische Reaktion handelt, die zumindest teilweise bei einer Temperatur von mindestens 500 °C abläuft; wobei die chemische Reaktion bevorzugt eine der folgenden Reaktionen ist: Dampfspalten, Dampfreformierung, Trockenreformierung, Propandehydrierung, eine Reaktion mit Kohlenwasserstoffen, die zumindest teilweise bei mehr als 500°C durchgeführt wird.

3. Vorrichtung (100, 200) nach einem der vorstehenden Ansprüche, wobei ein Neutralleiter (N) vorgesehen ist, der die Sternbrücke (22) mit dem Sternpunkt (34) verbindet.

4. Vorrichtung (100, 200) nach einem der vorstehenden Ansprüche, wobei die Sternbrücke (22) nicht mit einem Erdungsanschluss (4) verbunden ist.

5. Vorrichtung (100, 200) nach einem der vorstehenden Ansprüche, wobei eine Haupterdungsschiene vorgesehen ist und die Zuführungsabschnitte (152, 252) und die Abführungsabschnitte (154, 254) mit dieser Haupterdungsschiene elektrisch leitend verbunden sind.

6. Vorrichtung (200) nach einem der vorstehenden Ansprüche, wobei die Zuführungsabschnitte (252) und die Abführungsabschnitte (254) räumlich zueinander benachbart angeordnet sind und durch ein Verbindungselement (256) elektrisch leitend miteinander verbunden sind.

7. Vorrichtung (200) nach Anspruch 6, wobei ein Abstand benachbarter Zuführungsabschnitte (252) und Abführungsabschnitte (254) weniger als ein Zehntel einer Abmessung der Sternbrücke (22) beträgt.

8. Vorrichtung (200) nach einem der Ansprüche 6 oder 7, wobei ein Abstand benachbarter Zuführungsabschnitte (252) und Abführungsabschnitte (254) weniger als 10 cm, bevorzugt weniger als 5 cm, beträgt.

9. Vorrichtung (200) nach einem der Ansprüche 6 bis 8, wobei das Verbindungselement (256) über eine Erdanschlussleitung (257) elektrisch leitend mit einem Erdungsanschluss (4) verbunden ist und/oder, falls abhängig von Anspruch 4, elektrisch leitend mit der Haupterdungsschiene verbunden ist.

10. Vorrichtung (200) nach einem der Ansprüche 6 bis 9, wobei das Verbindungselement (256) einstückig, insbesondere als Gussbauteil, gefertigt ist.

11. Vorrichtung (200) nach Anspruch 10, wobei das Verbindungselement (256) einstückig mit den Rohreingangsabschnitten (252) und den Rohrausgangsabschnitten (254) gefertigt ist.

12. Vorrichtung (200) nach einem der Ansprüche 10 oder 11, wobei das Verbindungselement (256) als Gussbauteil gefertigt ist, wobei ein Ende der Erdanschlussleitung (257) in das Gussbauteil eingegossen ist.

## Claims

1. Device (100, 200) for performing a chemical reaction in a process fluid in a production plant (2) which has at least one ground terminal (4) connected to the ground for grounding production plant components, the device comprising
a reactor (110, 210) having one or more reaction pipes (12) which are guided into the reactor or guided out of the reactor via at least one supply portion (152, 252) and at least one discharge portion (154, 254) and have a number of electrically heatable pipe sections (14) which are connected to one another in a power delivery region by an electrically conductive neutral bridge (22); and
at least one power source (30) which is configured to provide a multiphase alternating current having N phases at N phase lines (U, V, W) with a predetermined voltage, N being an integer greater than or equal to 2, and, for each two phases, a phase shift between the two phases being 2π·k/N, k being an integer in the range of from 1 to N-1;
a number N of power terminals (20) being provided for each of the at least one power sources, each of which terminals is connected to at least one of the pipe sections in a power supply region, each of the power terminals being connected to one of the phase lines of the power source; and
a neutral point (34) at which the phase lines of the power source are connected being formed in the at least one power source, **characterized in that** the neutral point is not connected to a ground terminal.

2. Device according to claim 1, wherein the chemical reaction is a chemical reaction occurring at least partly at a temperature of at least 500°C; wherein the chemical reaction is preferably one of the following reactions: steam cracking, steam reforming, dry reforming, propane dehydrogenation, a reaction with hydrocarbons which is carried out at least partly at more than 500°C.

3. Device (100, 200) according to either of the preceding claims, wherein a neutral conductor (N) which connects the neutral bridge (22) to the neutral point (34) is provided.

4. Device (100, 200) according to any of the preceding claims, wherein the neutral bridge (22) is not connected to a ground terminal (4).

5. Device (100, 200) according to any of the preceding claims, wherein a main grounding bar is provided and the supply portions (152, 252) and the discharge portions (154, 254) are electrically conductively connected to this main grounding bar.

6. Device (200) according to any of the preceding claims, wherein the supply portions (252) and the discharge portions (254) are arranged spatially adjacent to one another and are electrically conductively connected to one another by a connecting element (256).

7. Device (200) according to claim 6, wherein a distance between adjacent supply portions (252) and discharge portions (254) is less than one tenth of a dimension of the neutral bridge (22).

8. Device (200) according to either claim 6 or claim 7, wherein a distance between adjacent supply portions (252) and discharge portions (254) is less than 10 cm, preferably less than 5 cm.

9. Device (200) according to any of claims 6 to 8, wherein the connecting element (256) is electrically conductively connected to a ground terminal (4) via a ground terminal line (257) and/or, if dependent on claim 4, is electrically conductively connected to the main grounding bar.

10. Device (200) according to any of claims 6 to 9, wherein the connecting element (256) is made in one piece, in particular as a cast component.

11. Device (200) according to claim 10, wherein the connecting element (256) is made in one piece with the pipe entry portions (252) and the pipe output portions (254).

12. Device (200) according to either claim 10 or claim 11, wherein the connecting element (256) is made as a cast component, wherein one end of the ground terminal line (257) is cast into the cast component.

## Revendications

1. Dispositif (100, 200) permettant de réaliser une réaction chimique dans un fluide de processus dans une installation de production (2), laquelle présente au moins une prise de terre (4) reliée à la terre pour la mise à la terre de pièces d'installation de production, comprenant
un réacteur (110, 210) comportant un ou plusieurs tubes de réaction (12), lesquels sont acheminés dans le réacteur ou hors du réacteur par l'intermédiaire d'au moins une section d'alimentation (152, 252) et d'au moins une section d'évacuation (154, 254) et présentent un certain nombre de tronçons de tube (14) pouvant être chauffés électriquement et reliés entre eux dans une zone de sortie de courant par un pont en étoile (22) électriquement conducteur ; et
au moins une source de courant (30) configurée pour fournir un courant alternatif polyphasé comportant N phases sur N lignes de phases (U, V, W) et comportant une tension prédéterminée, N étant un nombre entier supérieur ou égal à 2 et, pour deux phases, il existe un décalage de phases entre les deux phases de 2π·k/N, k étant respectivement un nombre entier dans la plage comprise entre 1 et N-1 ;
dans lequel, pour chacune de l'au moins une source de courant, un certain nombre N de prises de courant (20) est prévu, lesquelles sont respectivement reliées à au moins l'un des tronçons de tube dans une zone d'alimentation en courant, chacune des prises de courant étant reliée à l'une des lignes de phases de la source de courant ; et
dans lequel un point étoile (34) est formé dans l'au moins une source de courant, au niveau duquel les lignes de phases de la source de courant sont reliées, **caractérisé en ce que** le point étoile n'est pas relié à une prise de terre.

2. Dispositif selon la revendication 1, dans lequel la réaction chimique est une réaction chimique qui se déroule au moins partiellement à une température d'au moins 500 °C ; la réaction chimique étant de préférence l'une des réactions suivantes : vapocraquage, vaporeformage, reformage à sec, déshydrogénation du propane, une réaction avec des hydrocarbures réalisée au moins partiellement à plus de 500 °C.

3. Dispositif (100, 200) selon l'une quelconque des revendications précédentes, dans lequel un conducteur neutre (N) est prévu pour relier le pont en étoile (22) au point étoile (34).

4. Dispositif (100, 200) selon l'une quelconque des revendications précédentes, dans lequel le pont en étoile (22) n'est pas relié à une prise de terre (4).

5. Dispositif (100, 200) selon l'une quelconque des revendications précédentes, dans lequel un rail de mise à la terre principal est prévu et les sections d'alimentation (152, 252) et les sections d'évacuation (154, 254) sont reliées de manière électriquement conductrice audit rail de mise à la terre principal.

6. Dispositif (200) selon l'une quelconque des revendications précédentes, dans lequel les sections d'alimentation (252) et les sections d'évacuation (254) sont spatialement adjacentes les unes aux autres et sont reliées de manière électriquement conductrice entre elles par un élément de liaison (256).

7. Dispositif (200) selon la revendication 6, dans lequel une distance entre les sections d'alimentation (252) et les sections d'évacuation (254) adjacentes est inférieure à un dixième d'une dimension du pont en étoile (22).

8. Dispositif (200) selon l'une des revendications 6 ou 7, dans lequel une distance entre les sections d'alimentation (252) et les sections d'évacuation (254) adjacentes est inférieure à 10 cm, de préférence inférieure à 5 cm.

9. Dispositif (200) selon l'une des revendications 6 à 8, dans lequel l'élément de liaison (256) est relié de manière électriquement conductrice à une prise de terre (4) par l'intermédiaire d'une ligne de prise de terre (257) et/ou, si dépendant de la revendication 4, est relié de manière électriquement conductrice au rail de mise à la terre principal.

10. Dispositif (200) selon l'une des revendications 6 à 9, dans lequel l'élément de liaison (256) est fabriqué d'une seule pièce, en particulier sous forme de pièce coulée.

11. Dispositif (200) selon la revendication 10, dans lequel l'élément de liaison (256) est fabriqué d'une seule pièce avec les sections d'entrée de tube (252) et les sections de sortie de tube (254).

12. Dispositif (200) selon l'une des revendications 10 ou 11, dans lequel l'élément de liaison (256) est fabriqué en tant que pièce coulée, une extrémité de la ligne de prise de terre (257) étant coulée dans la pièce coulée.
